# EUROPEAN PATENT SPECIFICATION

(11) **EP 3 426 733 B1**
(45) Date of publication and mention of the grant of the patent: **17.09.2025**
(21) Application number: 16717694.0
(22) Date of filing: 07.03.2016
(51) Int. Cl.: C09D 5/34, C09K 3/10, E04B 1/68

(54) **GAP SEALING SYSTEM FOR FLOOR PLATES**
SPALTDICHTUNGSSYSTEM FÜR FUSSBODENPLATTEN
SYSTÈME DE SCELLEMENT D'ESPACE POUR PLAQUES DE PLANCHER

(43) Date of publication of application: 16.01.2019
(73) Proprietor: STEINBACHER, Franz, 92548 Altfalter (DE)
(72) Inventor: STEINBACHER, Franz, 92548 Altfalter (DE)
(74) Representative: Dreykorn-Lindner, Werner
(86) International application number: PCT/IB2016/000245
(87) International publication number: WO 2017/153795

(56) References cited:
- EP-A2- 1 270 836
- WO-A1-2012/098115
- DE-U1- 202015 008 008
- GB-A- 1 416 576
- GB-A- 1 580 342
- US-A- 2 229 317
- US-A1- 2010 071 292
- US-A1- 2014 083 038

## Description

### FIELD OF THE INVENTION

The present invention relates to caulking or sealing of joints and gaps between floor plates, whether resulting from tiles or spacing in bulkhead constructions, shrinking of concrete etc. and more particularly to joints which have to resist heavy loads.

### BACKGROUND OF THE INVENTION

Caulking as a term has spread to the building trade, meaning the activity of closing up joints and gaps in buildings.

This is mostly done with ready-mixed construction chemicals sold as caulk such as silicone, polyurethane, polysulfide, sylil-terminated-polyether or polyurethane and acrylic sealant. Unlike construction caulk, which is applied where no building movement is expected, a sealant is made of elastomeric materials that typically allow movement of 25% to 50% of the width of the joint.

One-component sealants are commonly sold in cartridges which are loaded into a pistol-like caulking gun (opening at the side) or barrel gun (opening at the end) for application. During the tool-working time, which varies by chemistry, the bead can be pressed into the joint so that it can bond with the materials on both sides, and also be smoothed. The time it takes for a chemical sealant to become a 'rubber' is known as the curing time and varies by temperature and humidity.

Silicone sealants are most common. They form a durable, water-tight seal, but are typically not resistant to heavy loads, whereas other sealants are less resistant to ageing.

To prevent three-sided adhesion or to avoid sagging in wide, deep joints, a backer rod made of plastic foam can be pressed into the gap before caulking. This is a flexible foam product used behind caulking to increase elasticity, force the caulking into contact with the sides of the joint creating a better bond, determine the thickness of the caulking, and define the cross-section hour-glass shape of the caulk.

The hour-glass shape provides the appropriate adhesive strength to the object at the sides of the joint in relation to the cohesive strength of the sealant itself. The depth of the sealant affects these strengths, too much or too little sealant can result in failure.

### PROBLEM TO BE SOLVED

With these workmanship techniques the hitherto best results can be achieved.

However, quite a few drawbacks remain: None of these flexible sealants really resist to heavy loads, and curing to a 'rubber' state does not necessarily provide long-lasting adhesion to the sidewalls of a gap between ground plates, particularly not if their composition is ageing at the borders.

Moreover, the setting of backer rods is as time consuming as the sealing procedure itself and the time-glass shape of the sealants leaves fouling indentations on the surface.

### OTHER PRIOR ART

There are quite a few other propositions for sealing gaps in floors in earlier patent applications, wherein two main approaches can be recognized:
One group refers to inserted vertical elements like emarginated metal sheets like DE 689 04 149 T2, DE 10 2005 058 087 B4, DE 2 243 088 A1, which are most intricate to be applied. Another group of sealing elements, which have to be put on to the slabs or tiles before laying, as with US 2005/0102964 A1, what implies high cost for production and logistics, another with particular structuring of slabs or tile flanges (so to tightly fitting into one another), as proposed in US 8,950,144 B2 and similar, which can only be applied in specially structured sites (you cannot apply it with deliberately cut elements), as well as systems using elastomer elements, that need to be pressed into gaps for sealing it, as US 2005/0104964 A1 und WO 2004/020763 A1. These however resist to loads only as far as their adhesion on the flanks of the gaps allows it.

Moreover, there are systems with overlays over gaps, filled with sealants as in DE 94 21 024 U1 , which however preclude a really plane surface.

Moreover EP 1 270 836 A2 discloses a gap sealing system based on a tape ("Trägerband") with an U-shaped extrusion along to its running direction, then called "Schlaufenband" that is fixed with glueing it to the flanges of the gap, to be secured by corner steels ("Winkelprofil") that cover the edges. This might be pressure resistant, but it implies a mostly unwanted amount of work. Moreover, there is no indication of a pressure-resistant filler.

US 2010/071292 A1 pertains to closing gaps in plaster-board wall coverings, wherein "exterior panels are sealed using the disclosed dual-tape core". So this again is a system using an overlay of tapes. There is no relation to flooring tiles and no indication of a pressure-resistant filler.

US 2014/083038 A1 refers to finishing walls with gipsum or plaster boards, wherein the closing of the inevitable joints between mounted panels is to level it with fillers of various formulations, applied over a layer of fabric of glass fibers. The aim here is to protect the seams against humidity, that would deteriorate the structure from the edges inwards. But there is no indication for application with floor tiles, nor of pressure resistance of the joints, nor of fillers applied therefore.

DE 20 2015 008 008 U1 describes a cornering system for tightweight construction panels. There is no relation to flooring tiles and no indication of pressure resistiveness in gaps, moreover no indication of application of pressure-resistive fillers.

US 2 229 317 A also discloses a system for "edge to edge setting of a pair of panels to form a seal or bond between the adjacent edges" and it is designed for "adapted to be partly prepared or formed in the shop or establishment in the shop, where the panels are cut". This does not make sense with, nor will normally be applied with floor tiles. Therefore pressure resistance of the gaps is not intended and not even mentioned, whereas waterproofing is the main issue, also all claims indicate "A waterproof joint for sealing the adjacent edges of a pair of panels".

GB 1 580 342 A also refers to a system of watertight sealing, here with gaps in concrete expansion joints. In this system the sealing is provided with a hollow profile, anchored in a t-profiled extrusion on both sides, that are embedded in a another layer of concrete. There is no indication or means for pressure resistance of the gaps.

WO 2012/098115 A1 describes a method of sealing complete layers of constructions - not just seals between them - and particularly refers to materials to be made permanently watertight. There is no reference to pressure resistance in gaps, nor to fillers providing the same.

GB 1 416 576 A discloses a "method for the elastic sealing of cracks, joints, defects and the like using an adherent and expandable painting medium or coating material". The method is based on a strip, which is a prefabricated elongate rubber or synthetic resin element, which is hollow and has four walls of which two are slightly inwardly curved flangeless walls and two are flange-carrying walls, there being oppositely-arranged projecting anchoring flanges of bulbous cross-section integral with the respective said flange- carrying walls. There is no indication on providing pressure resistance, nor with adding a filler to provide it. On the contrary, claims emphasize the sole application of polyacrylic resins and solvents.

### OBJECT OF THE INVENTION

Therefore it is the object of the present invention to find means of sealing, that are quickly done, long-lasting in their adhesion to the side walls and that resist to heavy loads as well as allowing for a real plane surface.

### SOLUTION / INVENTIVE STEP

The solution was found with providing a sealant, that does not cure to a rubber-like state, but remains permanently tenacious and only carries a non-sticky layer atop, while resistiveness to heavy loads is achieved by filling the sealant mass with compression-proof elements, like glass bubbles, perlites, metallic granulates or fine sand.

According to the invention a gap sealing as herein defined is characterized in claim 1.

The invention further provides a method of making a gap sealing between floor plates comprising the steps according to claim 9.

With this solution in most cases it is not mandatory to apply backer rods, which usually is as time consuming as the sealing itself.

### CLOSER DESCRIPTION OF THE INVENTION

The sealant consists of acrylic resins, made by polymerisation of pure acrylate monomers without solvents or water, which provides a mass, that does neither harden, nor loose its adhesiveness without further treatment.

It might well be filled up to to 60% of its volume with fine sand, synthetic plastics or metallic granulates, or glass bubbles (possibly of hollow spheres, if weight of the compound is an issue, as in application on boats and aircraft). But other fillers, as e.g. bloated perlite are also applicable.

The polymeric base might contain mineral colorings and flame inhibitors like aluminium hydroxide.

This polymeric mass can be applied at normal temperature -or preferably from heated reservoirs with heated hoses- through electric or pneumatic caulking guns, again preferably heated, into the gaps to be filled.

Due to the high flowability of the heated material the gap can be filled evenly, may be skimmed or stripped along to masking tapes afterwards (only needed, if experienced workforce is not available) and finally be covered with a layer of aluminium hydroxide powder for removing its stickiness, whereas the not sticking rest of powder may be swept off or vacuum cleaned.

In another embodiment the gap filler is produced in form of extruded caulking strips, provided between separating films or waxed paper, for to avoid the strips to stick to one another. These strips might be constantly inserted into the gap after gradually removing the lower cover film and pressed into the gap e.g. with a roller tool, before removing the top film.

### DESCRIPTION OF THE DRAWINGS:

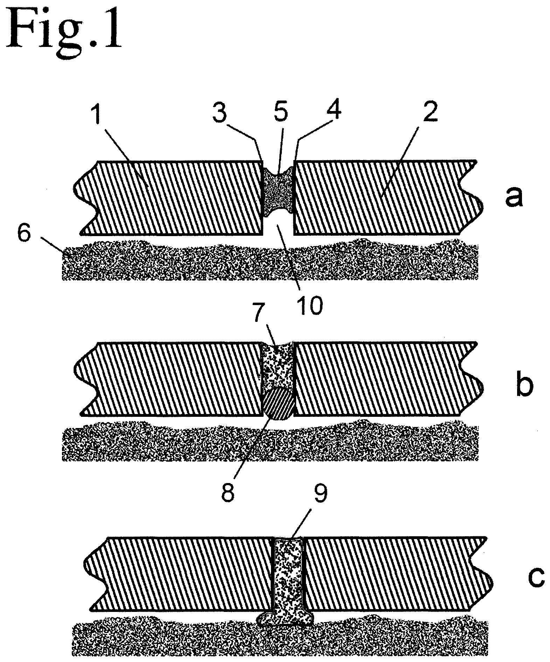

Fig 1 demonstrates the system in comparison to traditional caulking with a cross-section of the two ground plates 1 and 2, and the gap 10 between them.

In Sub-figure a classical sealant 5 is bridging the gap, just adhering to the flanges 3 and 4. This does not only form a secondary gap, where dirt may accumulate, but it also can be seen, that the load capacity of this sealant is limited to the adherence of the sealant 5 to the flanges 3 and 4.

Sub-figure b demonstrates the sealant 7 according to the present invention, filled with material like sand, glass bubbles or perlites, but filled on a backing rod 8 - which must as well have been applied to provide the hourglass shape in sub-figure 1a, without being shown there.

In Sub-figure c the gap is filled with sealant 9 down to its basis, wherein the sealant is also of the type of the here disclosed invention. The necessary flexibility here is provided by the whole compound. This obviously provides highest pressure resistance and a plane surface.

## Claims

1. A gap sealing for sealing gaps (10) between floor plates (1, 2), wherein a non-curing and permanently tenacious sealing material (7, 9) consists of pure acrylate monomers without solvents or water and pressure-resistant fillers, and that is covered with a non-sticky layer atop the gap (10).

2. The gap sealing according to claim **1,** wherein the sealing material (7, 9) in strips is covered with a removable film or paper.

3. The gap sealing according to-claim 1,-wherein the pressure-resistant fillers are flexible.

4. The gap sealing according to claim 1, wherein the pressure resistant fillers are fine glass hollow spheres, sand, synthetic plastic or metallic granulates or perlite material.

5. The gap sealing according to claim 1,-wherein the non-sticky layer is a powder of aluminum hydroxide.

6. The gap sealing according to claim 1,-wherein the volume fraction of the pressure-resistant fillers is a maximum of 60%.

7. The gap sealing according to claim 1,-wherein the sealing material comprising mineral colorings and/or flame inhibitors.

8. The flooring based on gap sealing according to claim 7,-wherein the flame inhibitor is aluminum hydroxide.

9. A process making use of the gap sealing according to claim 1, wherein the gaps (10) are sealed with the sealing material (7, 9) by applying heated electric or pneumatic caulking guns and heated reservoirs and -hoses and covering that with the non-sticky layer atop the gap (10).

10. A process making use of the gap sealing according to claim 2, wherein the gaps (10) are sealed with strips of pre-extruded sealing material (7, 9), that is provided between separating films or waxed paper wherein only the downside film or paper is gradually removed as much as the strip is pressed into the gap (10), wherein the upside film or paper is removed after the gap (10) is filled and the gap (10) is covered with a non-sticky layer atop the gap (10).

## Patentansprüche

1. Eine Spaltversiegelung zum Abdichten von Spalten (10) zwischen Bodenplatten (1, 2), wobei ein nicht aushärtendes und dauerhaft haftendes Dichtungsmaterial (7, 9) aus reinen Acrylatmonomeren ohne Lösungsmittel oder Wasser und druckbeständigen Füllstoffen besteht und das auf der Oberfläche der Spalte (10) mit einer nichtklebenden Schicht abgedeckt ist.

2. Spaltabdichtung nach Anspruch 1, wobei das streifenförmige Dichtungsmaterial (7, 9) mit einer abziehbaren Folie oder einem abziehbaren Papier abgedeckt ist.

3. Spaltabdichtung nach Anspruch 1, wobei die druckfesten Füllstoffe flexibel sind.

4. Spaltabdichtung nach Anspruch 1, wobei die druckfesten Füllstoffe feine Glashohlkugeln, Sand, Kunststoff- oder Metallgranulate oder Perlite sind.

5. Spaltdichtung nach Anspruch 1, wobei die nichtklebende Schicht ein Pulver aus Aluminiumhydroxid ist.

6. Spaltabdichtung nach Anspruch 1, wobei der Volumenanteil der druckfesten Füllstoffe maximal 60 % beträgt.

7. Spaltabdichtung nach Anspruch 1, wobei das Dichtungsmaterial mineralische Farbstoffe und/oder Flammhemmer enthält.

8. Bodenbelag auf Basis einer Spaltversiegelung nach Anspruch 7, wobei der Flammhemmer Aluminiumhydroxid ist.

9. Ein Verfahren unter Verwendung der Spaltversiegelung nach Anspruch 1, wobei die Spalte (10) mit dem Dichtungsmaterial (7, 9) durch den Einsatz von beheizten elektrischen oder pneumatischen Kartuschenpistolen und beheizten Behältern und Schläuchen abgedichtet werden und diese mit der nicht klebenden Schicht auf dem Spalt (10) abgedeckt werden.

10. Ein Verfahren unter Verwendung der Spaltversiegelung nach Anspruch 2, wobei die Spalten (10) mit Streifen aus vorextrudiertem Dichtungsmaterial (7, 9) versiegelt werden, das zwischen Trennfolien oder Wachspapier angeordnet ist, wobei nur die untere Folie oder das untere Papier schrittweise entfernt wird, soweit der Streifen in den Spalt (10) gedrückt wird, wobei die obere Folie oder das obere Papier entfernt wird, nachdem der Spalt (10) gefüllt ist, und der Spalt (10) mit einer nichtklebenden Schicht auf dem Spalt (10) abgedeckt wird.

## Revendications

1. Joint d'étanchéité pour joints d'espaces (10) entre des plaques de plancher (1, 2), dans lequel un matériau d'étanchéité non durcissant et tenace en permanence (7, 9) est constitué de monomères d'acrylate purs sans solvants ni charges résistantes à l'eau et à la pression, et qui est recouvert d'une couche non collante au-dessus de l'espace (10).

2. Joint d'étanchéité selon la revendication 1, dans lequel le matériau d'étanchéité (7, 9) en bandes est recouvert d'un film ou d'un papier amovible.

3. Joint d'étanchéité selon la revendication 1, dans lequel les charges résistantes à la pression sont flexibles.

4. Joint d'étanchéité selon la revendication 1, dans lequel les charges résistantes à la pression sont des sphères creuses en verre fin, du sable, des granulés synthétiques en plastique ou en métal ou de la perlite.

5. Joint d'étanchéité selon la revendication 1, dans lequel la couche non collante est une poudre d'hydroxyde d'aluminium.

6. Joint d'étanchéité selon la revendication 1, dans lequel la fraction volumique des charges résistantes à la pression est au maximum de 60 %.

7. Joint d'étanchéité selon la revendication 1, dans lequel le matériau d'étanchéité comprend des colorants minéraux et/ou des inhibiteurs de flamme.

8. Revêtement de sol à base de scellement d'espaces selon la revendication 7, dans lequel l'inhibiteur de flamme est l'hydroxyde d'aluminium.

9. Procédé utilisant le scellement d'espaces selon la revendication 1, dans lequel les espaces (10) sont scellés avec le matériau d'étanchéité (7, 9) en appliquant des pistolets à calfeutrer électriques ou pneumatiques chauffés et des réservoirs et tuyaux chauffés et en recouvrant ceux-ci avec la couche non collante au-dessus de l'espace (10).

10. Procédé utilisant le scellement d'espace selon la revendication 2, dans lequel les espaces (10) sont scellés avec des bandes de matériau d'étanchéité préextrudé (7, 9), qui est prévu entre des films de séparation ou du papier ciré, dans lequel seul le film ou le papier inférieur est progressivement retiré à mesure que la bande est pressée dans l'espace (10), dans lequel le film ou le papier supérieur est retiré après que l'espace (10) est rempli et l'espace (10) est recouvert d'une couche non collante au-dessus de l'espace (10).
